# EUROPÄISCHE PATENTSCHRIFT

(11) **EP 0 550 827 B1**
(45) Veröffentlichungstag und Bekanntmachung des Hinweises auf die Patenterteilung: **18.06.1997**
(21) Anmeldenummer: 92120353.5
(22) Anmeldetag: 27.11.1992
(51) Int. Cl.: G02F 1/33

(54) **Verfahren und Vorrichtung zur Fehlerkorrektur bei akusto-optischer Lichtbündel- insbesondere Laserlicht-Ablenkung**
Method and device for error correction of acousto-optic light beam deflection, in particular of laserlight
Méthode et dispositif pour la correction d'erreur d'une déflexion acousto-optique d'un faisceau lumineux, notamment pour lumière laser

(30) Priorität: 09.01.1992 DE 4200374
(43) Veröffentlichungstag der Anmeldung: 14.07.1993
(73) Patentinhaber: MICRONIC LASER SYSTEMS AB, S-18303 Täby (SE)
(72) Erfinder: Sandström, Torbjörn, 43543 Mölnlycke (SE)
(74) Vertreter: Nöth, Heinz, Dipl.-Phys.

(56) Entgegenhaltungen:
- DE-A- 2 555 162
- US-A- 3 799 652
- IBM TECHNICAL DISCLOSURE BULLETIN Bd. 13, Nr. 9, Februar 1971, New York, USA, SS 2634-2635; B.R.BROWN, S.H. ROWE: 'Acoustic Light Deflector Chromatic Variation Compensation'
- ELECTRONICS AND COMMUNICATIONS IN JAPAN Bd. 58-C, Nr. 4, April 1975, SS 115-123; A. FUKUMOTO ET AL.: 'Raster-Scanned Laser Display System Using Two-Dimensional TeO2 Acoustooptic Light Deflector'

## Beschreibung

Die Erfindung betrifft ein Verfahren und eine Vorrichtung zur Fehlerkorrektur bei akusto-optischer Lichtablenkung, insbesondere durch akusto-optische Diffraktion. Insbesondere kommt die Erfindung zur Anwendung beim Scanning eines Laserstrahls auf Oberflächen zum Lesen oder Schreiben von Mustern.

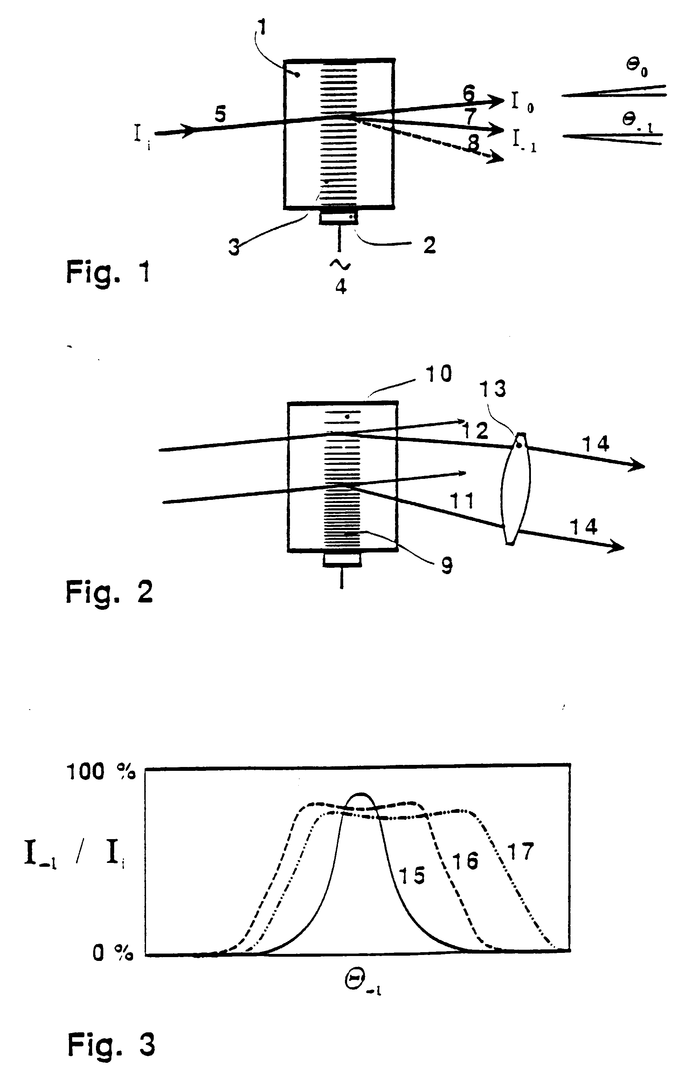

Es ist bekannt, ein Lichtbündel durch Wechselwirkung mit Ultraschallwellen innerhalb eines Festkörpermaterials abzulenken. Man nennt diesen Vorgang akusto-optische Lichtablenkung. In Fig. 1 ist ein akusto-optischer Modulator bzw. Scanner 1 dargestellt. Das feste Medium dieses Scanners kann aus glasartigem Material bestehen. In den meisten technischen Anwendungen handelt es sich jedoch um ein Kristallmaterial. Einem piezoelektrischen Schallwandler 2, der an der Oberfläche des Kristalls 1 befestigt ist, wird ein hochfrequentes Signal 4 zugeführt. Im Kristall breitet sich eine Ultraschallwelle 3 aus. Ein einfallendes Lichtbündel 5, welches sich durch das durchsichtige Kristallmaterial fortpflanzt, verläßt den Kristall teilweise als nicht abgelenktes Lichtbündel 6 und teilweise als abgelenktes Lichtbündel 7. Die Ablenkung wird durch Beugung des Lichtes am Gitter, welches durch die Ultraschallwelle deformiert wird, erzeugt. Durch geeignete Wahl des Einfallswinkels Ⓗₒ und der Hochfrequenz kann der Hauptteil der Iᵢ des einfallenden Lichts an das gebeugte Bündel 7 mit dem Winkel Ⓗ₋₁ mit der Lichtstärke I₋₁ gekoppelt werden. Die Indizes geben die sogenannte Beugungsordnung wieder. Bei der gezeigten Geometrie wird fast das gesamte einfallende Lichtbündel an die Beugungsordnung -1 gekoppelt. Die Lichtstärke I₀ des nicht abgelenkten Bündels 6 wird dadurch stark abgeschwächt.

Die Ablenkung folgt den optischen Gesetzen, und der Winkel des abgelenkten Bündels wird nur durch die relativen Wellenlängen von Licht- und Ultraschallwellen im Kristall gesteuert. Auf diese Weise erhält man sehr genau gesteuerte Ablenkwinkel. Eine Steigerung der Hochfrequenz führt zu kürzeren Schallwellen und zu einem abgelenkten Lichtbündel 8 mit größerem Ablenkwinkel, das in der Fig. 1 strichliert dargestellt ist. Da die Signalfrequenz sehr genau gesteuert werden kann, erreicht man die schon angesprochene genaue Steuerung des Ablenkwinkels.

Von besonderem Interesse sind solche Anwendungsfälle, bei denen die Hochfrequenz linear mit der Zeit ansteigt. Dies führt zu Ablenkwinkeln, die ziemlich nahe linear mit der Zeit über einen bestimmten Winkelbereich anwachsen. Dieser Ablenkwinkelbereich beträgt typischerweise 1 bis 2°. Ein akusto-optischer Lichtablenker, welcher auf diese Weise betrieben wird, kann in Zusammenwirkung mit Fokussierungsoptiken angewendet werden, so daß ein Fokusspot auf einer Oberfläche erzeugt werden kann. Dieser Spot kann mit hoher Geschwindigkeit und großer Präzission die Oberfläche scannen.

Auf diese Weise können Lese- und Schreibinformationen auf die Oberfläche aufgebracht werden.

Ein bekanntes Phänomen beim linearen Scanning ist ein durch den Scanner erzeugter Zylinderlinseneffekt, welcher in Fig. 2 dargestellt ist. Mit ansteigender Ultraschallfrequenz hat die Schallwelle 9, welche den Schallgenerator gerade verlassen hat, eine höhere Frequenz als die Schallwelle 10, welche weiter vom Wandler 2 entfernt ist. Demgemäß ist der Ablenkwinkel eines Strahlteils 11, der näher zum Wandler liegt, größer als der Ablenkwinkel eines Strahlteils 12, der weiter vom Wandler 2 wegliegt. Die Stärke dieses Effekts hängt von der Scanning-Geschwindigkeit ab und kann durch eine äußere Zylinderlinse 13 kompensiert werden, so daß ein paralleles Lichtbündel 14 aus der Linse austritt.

Ein akusto-optischer Deflektor ist, wie in der Fig. 1 gezeigt ist, einfach dargestellt. Es wird ein optisch isotropes Medium, beispielsweise dichtes Flintglas, verwendet. Ein wichtiger Parameter des Deflektors ist ein geeigneter Scanning-Winkelbereich, der häufig durch die geeignete Bandbreite des eingekoppelten Hochfrequenzsignals bezeichnet wird. Innerhalb dieses Bereiches erreicht man eine wirkungsvolle Ankopplung an das abzulenkende Lichtbündel. Die nicht abgelenkte Lichtstärke Io ist dann stark abgeschwächt. Außerhalb des geeigneten Bereiches ist die Ankopplung schwächer und das durch Beugung zwar abgelenkte Bündel enthält jedoch nur noch einen kleinen Anteil an der Einfallslichtstärke, d.h. I₋₁ << Iᵢ. Die Kopplungswirkung als Funktion des Winkels für einen einfachen Deflektor mit isotropem Medium ist in Fig. 3 durch die Kurve 15 dargestellt.

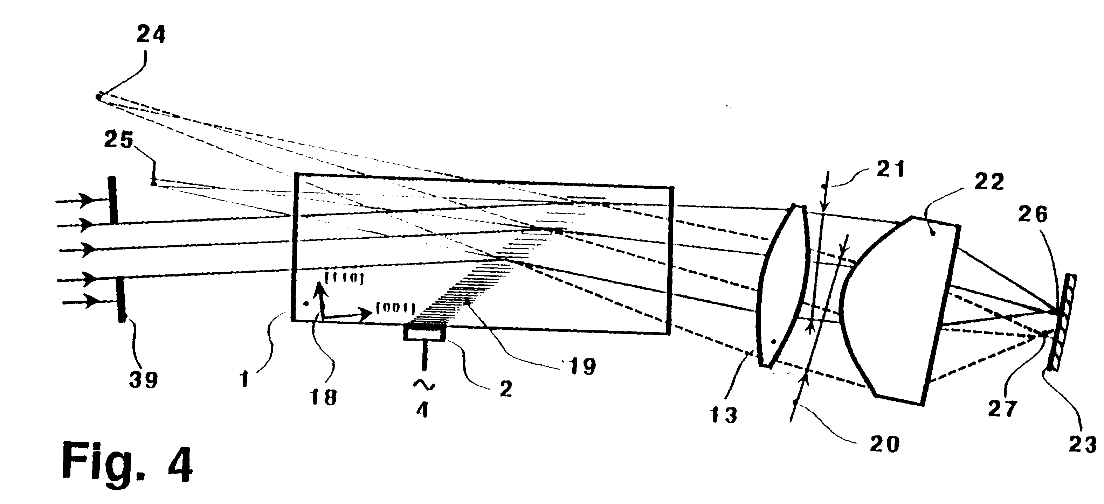

Aus IEEE Transactions on Sonics and Ultrasonics, Vol. SU-23, No. 1, Seiten 2 bis 22 (1976) I.C. Chang, Acousto-optic optische Devices and Applications ist es bekannt, die Anisotropie bestimmter Kristalle in der Weise auszunützen, daß der anwendbare Winkelbereich vergrößert wird, wie es durch die Kurve 16 in Fig. 3 dargestellt ist. Ein häufig angewendetes Medium ist Paratellurit (TeO₂), das stark anisotrop ist. Ferner ist aus dieser Veröffentlichung bekannt, daß man den anwendbaren Ablenkwinkelbereich noch dadurch verbreitern kann, daß der optisch anisotrope Kristall in einem Winkel gegenüber der optischen Achse 18 (Fig. 4) geschnitten wird. Man kommt dann zu einer verbreiterten Effektivitätskurve 17 (Fig. 3) für den Winkelbereich.

Für derartige außerhalb der optischen Achse liegende Anordnungen ist ein weiteres Phänomen, ein sogenanntes akustisches walk-off, bekannt. Bei einigen Kristallen ist die Schallausbreitungsgeschwindigkeit in einer Richtung höher als in einer Richtung senkrecht dazu. In TeO₂ ist dieser Effekt extrem stark ausgebildet. In der [1,1,0] -Kristallrichtung beträgt die Schallausbreitungsgeschwindigkeit 617 m/s, und in der [0,0,1] -Kristallrichtung beträgt die Schallausbreitungsgeschwindigkeit 4200 m/s. Wenn der piezoelektrische Wandler 2 gegenüber der Kristallachse in einem kleinen Winkel angeordnet ist, breitet sich die Schallwelle in diesen beiden Richtungen aus. Die Ausbreitung ist jedoch in der einen Richtung bedeutend schneller. Hieraus resultiert, daß die Fortpflanzungsrichtung der Schallwelle nicht senkrecht zum Wandler ist, sondern sich ein Schallwellenfeld 19 ausbreitet, das mehr zur schnellen Ausbreitungsrichtung hin geneigt ist. Der Winkel gegenüber der normalen Richtung des Wandlers wird der Walk-off-Winkel genannt. Die Walk-off-Richtung kann 45^{o} oder mehr in TeO₂ betragen. Die Wellenebenen verlaufen dabei immer parallel zum Wandler 2, d.h. das Walk-off-Phänomen ändert den Einfallswinkel des Lichts, welcher für die beste Ablenkwirkung zu wählen ist, nicht. Er wirkt sich nur innerhalb des Kristalls dort aus, wo die Wechselwirkung zwischen akustischer Welle und Lichtwelle stattfindet.

Wenn man das akusto-optische Scanning durch Erweiterung des anwendbaren Ablenkwinkelbereichs und Erhöhung der Abtastgeschwindigkeit in die Nähe seiner Grenzen betreibt, ergeben sich Wellenfrontfehler im abgelenkten Lichtbündel, welche die Erzielung eines guten Fokusspots im gesamten Scan-Bereich unmöglich machen. Die hauptsächlichen Fehler sind eine Krümmung der bestmöglichen Fokusebene und Koma. Hieraus resultieren ein gestörter Kontrast und eine gestörte Definition in Richtung entlang dem Scanning.

Aufgabe der Erfindung ist es daher, ein Verfahren und eine Vorrichtung der eingangs genannten Art zu schaffen, bei denen auch bei verbreitertem anwendbaren Ablenkwinkelbereich und erhöhter Scanning-Geschwindigkeit Fehler am Fokusspot beseitigt sind.

Diese Aufgabe wird erfindungsgemäß beim Verfahren durch die kennzeichnenden Merkmale des Anspruchs 1 und bei der Vorrichtung durch die kennzeichnenden Merkmale des Anspruchs 13 gelöst.

Die Unteransprüche enthalten Weiterbildungen der Erfindung.

Durch die Erfindung wird ein Verfahren zur Kompensation von Wellenfrontfehlern insbesondere in akusto-optischen Lichtablenkern mit raschem Scanning und großen Walk-off-Winkeln geschaffen. Die Fehlerkompensation beruht auf einer passiven Hilfsablenkung in einer Ablenkebene, welche im Falle des Schreibens nach der Wechselwirkungsebene zwischen Schallwellenfeld und Lichtstrahl liegt. Im Falle des Lesens verläuft die Lichtausbreitung in entgegengesetzter Richtung. Es ist möglich, die Geometrie des abgelenkten Lichtbündels unabhängig vom Scanning-Winkel und der Scanning-Geschwindigkeit zu gestalten. Einem bestimmten Lichtablenker bzw. Deflektor kann eine Hilfsablenkeinrichtung hinzugefügt werden, die nur in Abhängigkeit von den Deflektoreigenschaften ausgestaltet ist. Durch die Hilfsablenkung wird eine Kompensation der Wechselwirkungsfehler bis zu einem solchen Umfang erreicht, daß die vervollständigte Scanning-Optik auf die Diffraktion begrenzt wird. Die Geometrie des Hilfsablenkmittels kann so gewählt werden, daß die Abhängigkeit der durch die Geometrie der Wechselwirkungsebene im Deflektor verursachten Lichtbündelbreite vom Ablenkwinkel (Scanning-Winkel) kompensiert wird. Die Geometrie der Hilfsablenkeinrichtung kann in Abhängigkeit vom geometrischen Strahlverlauf noch optimiert werden.

Die Erfindung zeigt mithin ein Verfahren und eine Vorrichtung zur Kompensation von Wellenfrontfehlern in einer akusto-optischen Lichtablenkeinrichtung mit wenigstens einem Hilfsablenkmittel, das ein akusto-optisch abgelenktes Lichtbündel mit vom Ablenkwinkel unabhängiger Geometrie erzeugt und entgegengesetzt zur Abhängigkeit der Breite des abgelenkten Lichtbündels vom Ablenk-Winkel (Scanning-Winkel) wirkt.

Die beigefügten Figuren dienen zur Erläuterung der Erfindung. Es zeigt:
- Fig. 1: schematisch eine akusto-optische Deflektoranordnung;
- Fig. 2: das Scanning eines breiten Lichtstrahls mit Hilfe einer linear ansteigenden Frequenz zur Erläuterung des Zylindereffekts in einer akusto-optischen Deflektoreinrichtung bzw. einem Lichtablenker;
- Fig. 3: Kurvendarstellungen zur Erläuterung der Vergrößerung der Winkelbereiche bei optisch anisotropen Kristallen und bei außeraxialem Betrieb;
- Fig. 4: eine Erläuterung der Fehlerentstehung in einem Scanner mit Fokussierungsoptiken;
- Fig. 5: eine Korrektur der in Fig. 4 erläuterten Fehler; und
- Fig. 6a bis 6d: vier Ausführungsbeispiele zur Fehlerkorrektur gemäß der Erfindung.

Die Erfindung beruht auf der Erkenntnis, daß der wichtigste geometrische Effekt, welcher zu Fehlern führt, die Abhängigkeit der Breite des abgelenkten Strahlbündels vom Ablenkwinkel ist. Das Lichtbündel wird in der Wechselwirkungsebene, d.h. in der Mitte des akustischen Wellenfeldes "gebeugt". Wenn diese Ebene nicht senkrecht zum abgelenkten Lichtbündel verläuft, ist die Breite des abgelenkten Lichtbündels vom Ablenkwinkel abhängig. Dieser Effekt ist bei großen Walk-off-Winkeln am stärksten ausgeprägt.

Anhand der Fig. 4 soll dies durch Analyse des Strahlverlaufs noch näher erläutert werden. Der Einfachheit halber ist die an der Einfallsfläche und der Ausgangsfläche des Ablenkkristalls auftretende Brechung, obwohl sie in den Berechnungen mit berücksichtigt wird, nicht dargestellt. Ein Lichtablenker (Scanner) lenkt mit hoher Geschwindigkeit bei periodisch ansteigender Frequenz das Lichtbündel ab. Der oben schon erläuterte Zylindereffekt bewirkt, daß das Licht divergiert, und die Zylinderlinse 13 richtet das Licht zu einem parallelen Bündel aus. Das parallele Lichtbündel wird an einer Objektivlinse auf eine flache Oberfläche 23, welche senkrecht zur optischen Achse der Objektivlinse verläuft, fokussiert. Die ausgezogenen Linien zeigen vom Lichtbündel den Mittelstrahl und die Randstrahlen, welche durch eine Apertur 39 definiert sind, in ausgezogenen Linien zu einem Zeitpunkt t1 und die strichlierten Linien die gleichen Strahlen zu einem späteren Zeitpunkt t2. Zum Zeitpunkt t2 sind die Ablenkwinkel aller Strahlen, d.h. der Randstrahlen und des Mittelstrahls größer. Bei einer genauen Untersuchung ergibt sich zwar, daß die Winkel zwischen diesen Strahlen sich vom Zeitpunkt t1 zum Zeitpunkt t2 nur um einen vernachlässigbaren Betrag ändern, jedoch aufgrund des größeren Winkels gegenüber der Wechselwirkungsebene 19 überdecken die Strahlen zum Zeitpunkt t2 einen größeren Bereich, wodurch der Bündeldurchmesser 20 zum Zeitpunkt t2 größer ist als der Bündeldurchmesser 21 zum Zeitpunkt t1. Die Bündeldurchmesser 20 und 21 werden, wie die Fig. 4 zeigt, unmittelbar nach der Zylinderlinse 13 erfaßt. Die Position 24 der imaginären Lichtquelle, von welcher das Licht ausgesendet scheint, ist von der Linse 13 zum Zeitpunkt t2 weiter entfernt als die Position 25 der imaginären Lichtquelle zum Zeitpunkt t1. Die Kombination aus Zylinderlinse 13 und Objektivlinse 22 stellt Bilder der imaginären Lichtquellen 24 und 25 auf der Oberfläche 23 dar. Der Streckenunterschied wirkt sich als Fokusverschiebung aus. Eine genaue Analyse zeigt, daß diese Fehler selbst für einzelne Strahlen des Lichtbündels auftreten. ES ergeben sich somit Wellenfrontfehler im Lichtstrahlbündel, und die Brennpunkte 26 und 27 sind nicht einwandfrei.

Der Mechanismus für eine perfekte lineare Frequenz-Zeitabhängigkeit läßt sich einfach darstellen. Die beiden Randstrahlen, welche die Umrandung der Apertur 39 passieren, definieren die Breite des einfallenden Strahls. Die Randstrahlen treffen in den gleichen Punkten in der Wechselwirkungsebene auf. Der Abstand zwischen diesen Punkten bleibt konstant während der Abtastung. Die Schallgeschwindigkeit des Materials ist konstant. Es existiert daher von einem Punkt zum anderen eine konstante Zeitverzögerung bei der fortschreitenden Schallwelle. Bei einem linearen Frequenzanstieg ergibt sich ein konstanter Frequenzunterschied zwischen diesen beiden Punkten. Der Ablenkwinkel ist eine nahezu exakt lineare Funktion der Frequenz, und eine lineare Frequenzabhängigkeit ergibt eine konstante Differenz für den Ablenkwinkel zwischen den beiden Randstrahlen, d.h. die beiden Randstrahlen bilden einen spitzen Winkel, der während der Abtastung konstant bleibt.

Wie aus der Fig. 4 zu ersehen ist, lassen sich die virtuellen Licht aussendenden Punkte 24 und 25 für die divergierenden Lichtbündel bei den beiden unterschiedlichen Ablenkwinkeln graphisch aus den Randstrahlen konstruieren. Die virtuellen Punkte 24 und 25 werden von den Linsen 13 und 22 auf der Oberfläche 23 abgebildet. Um diese beiden Punkte auf der Oberfläche 23 zu fokussieren, ist es erforderlich, daß diese von der Linse 13 einen gleichen Abstand aufweisen. Dies ist jedoch bei dem Stand der Technik, wie die Fig. 4 zeigt, nicht der Fall. Bei der Analyse stellt sich heraus, daß der Abstand der Zylinderlinse 13 zum Ort des jeweiligen virtuellen Punktes während einer Ablenkung sich aufgrund der Änderung der Bündelbreite nach der akusto-optischen Wechselwirkung sich ändert. Zum Zeitpunkt t2 ist der virtuelle Punkt 24 von der Zylinderlinse 13 weiter entfernt als der virtuelle Punkt 25 zum Zeitpunkt t1. Hieraus resultiert eine Änderung der jeweiligen Foki auf der Oberfläche 23. Wenn man mehr als zwei Strahlen betrachtet, stellt sich heraus, daß diese sich nicht alle in gleichem Punkt, d.h. in gleichen virtuellen Licht aussendenden Punkten 24 bzw. 25 schneiden. Diese Punkte sind daher verwischt. Selbst bei einer Refokussierung ist es daher unmöglich, einen perfekten Fokusspot irgendwo auf der Oberfläche 23 zu erhalten.

Dieses Phänomen wirkt sich bei größeren Walk-off-Winkeln und höheren Scanning-Geschwindigkeiten in verstärktem Maße aus. Um den äußersten Scanning-Durchsatz für ein bestimmtes Deflektormaterial und eine bestimmte Gerätegröße zu erreichen, muß die Bandbreite der eingekoppelten Hochfrequenz bzw. der Winkelbereich des Ablenkwinkels erhöht werden. Dies erreicht man durch ein hohes Walk-off-Design und durch ein Scannen mit hoher Geschwindigkeit, woraus jedoch ein starker Zylindereffekt resultiert. Ohne die Korrektur, welche durch die Erfindung verursacht wird, würde man ein Deflektorsystem haben, das aufgrund der großen Foki und der Wellenfrontfehler nicht einsatzfähig wäre.

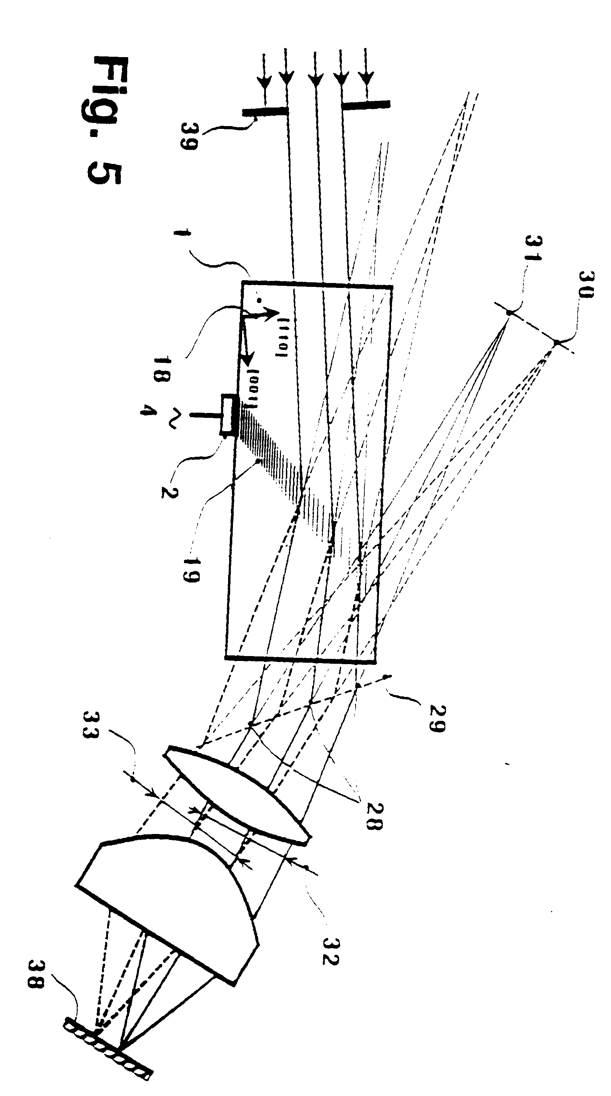

Gemäß der Erfindung werden die geometrischen Fehler durch eine zweite Hilfsablenkung 28 in einer Ablenkebene 29, welche in Fig. 5 schematisch dargestellt sind, kompensiert. Hierdurch wird eine umgekehrte Winkelabhängung der Strahlbreite erreicht. Wie in der Fig. 5 dargestellt ist, wird in einer Ablenkebene 29 eine Hilfsablenkung 28 um einen Winkel erreicht, die unabhängig ist von der Zeit bzw. dem Ablenkwinkel und der Scanning-Geschwindigkeit. Auf diese Weise erreicht man eine Kompensation der geometrischen Fehler, die durch die Geometrie der Wechselwirkung zwischen Lichtbündel und Akustikwellenfeld sich ergeben. Die Strahldurchmesser 32 und 33, welche zu verschiedenen Zeiten erreicht werden, sind im wesentlichen gleich und konstant während einer Scan, beispielsweise einer Scan-Zeile. Es wird ein neuer Satz von imaginären Lichtquellenpunkten 30 und 31 erzeugt, die in einer Ebene liegen, welche senkrecht zur optischen Achse der Zylinderlinse 13 und der End- bzw. Objektivlinse 22 liegt. D.h. die imaginären Lichtquellenpunkte haben gleichen Abstand von der Zylinderlinse 13 bzw. der Objektivlinse 22. Die Wellenfrontfehler im Lichtstrahl sind verringert, wodurch die von der Endlinse 22 erzeugten Foki perfekt ausgebildet sind und in der Ebene der flachen Oberfläche, welche mit der Fokusebene 38 übereinstimmt, liegen. Die optimale Ablenkgeometrie für die Hilfsablenkung 28 in der Ablenkebene 29 ergibt sich aus dem speziellen Design für die Deflektoranordnung, bestehend aus Modulatorkristlall 1 und Schallwandler 2. Da die Ablenkwirkung zeit- und geschwindigkeitsunabhängig ist, kann sie allein aus den Eigenschaften der Deflektoranordnung zum Zeitpunkt der Gestaltung des Deflektors bestimmt werden.

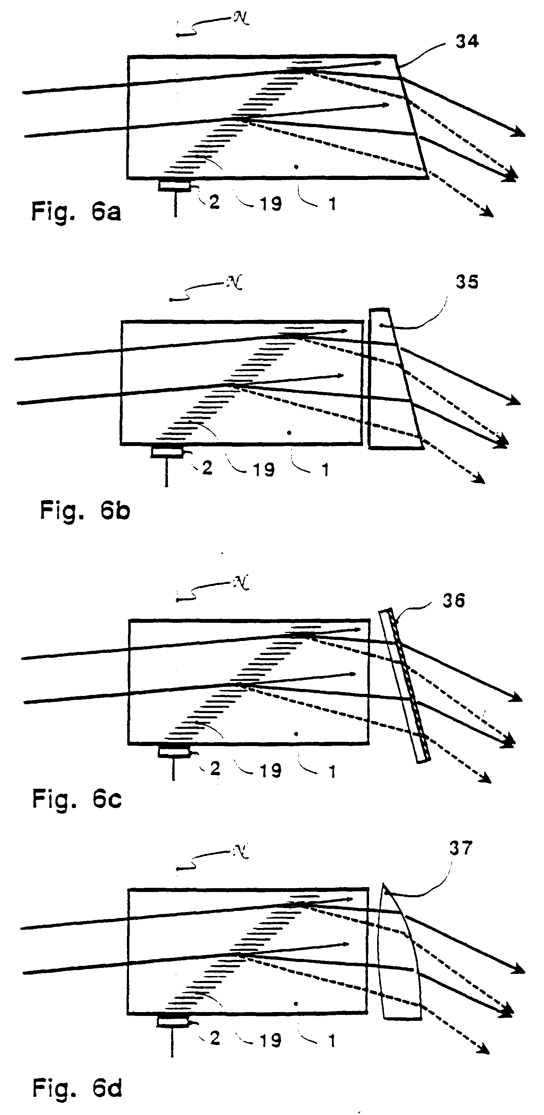

In der Fig. 6 sind vier Ausführungsbeispiele zur Gestaltung der Hilfsablenkung 28 (Fig. 5) dargestellt.

Gemäß Fig. 6a läßt sich die Hilfsablenkung durch entsprechende Bemessung des Winkels der Endfläche 34, insbesondere Schnittfläche des Kristalls 1, gegenüber der Flächennormalen N der Abstrahlfläche des Schallwandlers 2 erreichen, wobei die Neigung des Winkels der Endfläche 34 entgegengesetzt zum Walk-off-Winkel liegt.

Gemäß dem Ausführungsbeispiel der Fig. 6b erreicht man die Hilfsablenkung durch ein Prisma 35, bei dem ebenfalls die Endfläche, aus welcher das Lichtbündel austritt, einen der Fig. 6a entsprechenden bestimmten Schnittwinkel aufweist.

Gemäß dem Ausführungsbeispiel der Fig. 6c erreicht man die Hilfsablenkung mit Hilfe einer Diffraktionsoptikeinrichtung 36 in Form einer beschichteten Platte, welche ähnliche Eigenschaften hat wie ein Prisma. Die Beschichtung der durchsichtigen Platte enthält Diffraktionsmikrostrukturen.

Beim Ausführungsbeispiel der Fig. 6d erreicht man die Fehlerkorrektur mit Hilfe einer dezentrierten Zylinderlinse 37 mit ebenfalls brechender Wirkung an der Grenzfläche des Strahlaustritts aus der Zylinderlinse 37.

Mit Ausnahme bei dem Ausführungsbeispiel der Fig. 6d, in welchem der Zylinderlinseneffekt durch die Zylinderlinse 37 kompensiert werden kann, schließen sich bei den anderen Ausführungsbeispielen die Zylinderlinse 13 und die Endlinse 22 im Lichtbündel bildenden System an.

Es ist auch möglich, eine Kombination der oben gezeigten Strahlablenkungssysteme zur Erzeugung der Hilfsablenkung 28 einzusetzen. Dabei kann das Prisma auch an den Kristall zementiert sein. Es können auch verschiedene Prismen verwendet werden. Ferner können das Prisma 35 oder die Diffraktionseinrichtung 36 mit der Zylinderlinse 13 kombiniert sein.

Der zu wählende Einfallswinkel des durch den Kristall 1 geschickten Lichtstrahls wird innerhalb eines vorgegebenen anwendbaren Winkelbereichs ausgewählt. Dieser Winkel hängt nur von der Wechselwirkungsphysik zwischen Lichtbündel und akustischem Wellenfeld im Kristall, vom Kristalltyp, der Wellenlänge und dem Winkel des angekoppel ten Schallwandlers 2 gegenüber den Kristallachsen ab.

Die Ausbreitung durch den Modulatorkristall 1 gehorcht dem Snellschen Brechungsgesetz an Grenzflächen. Der Ablenkwinkel durch akusto-optische Wechselwirkung folgt den Phasenanpassungs- und/oder Impulserhaltungsgesetzen, welche in oben genannter Veröffentlichung aus IEEE "Transactions on Sonics and Ultrasonics" bekannt sind. Die Hochfrequenz gegenüber der Position in der Brennebene 38 oder gegenüber dem Winkel, wenn der Strahl nicht fokussiert ist, ist dadurch bestimmt, daß die Strahlmitte in die Eingangsapertur gelegt wird. Es wird dann die Frequenz-Zeit-Funktion für den gewünschten Ort bzw. Winkel nach der Zeit berechnet. Dies ist typischerweise eine lineare Funktion. Die abgeleitete Frequenz-Zeitfunktion kann linear sein. Sie kann jedoch auch eine geringe Nichtlinearität aufweisen, um Linsenverzerrungsfehler oder andere Fehler zu kompensieren. Durch die Frequenz-Zeitbeziehung, die für einen Punkt bestimmt ist, kennt man die Frequenz-Zeitabhängigkeit an jeder Stelle in der Apertur, da die Akustikwelle mit einer bekannten Geschwindigkeit sich ausbreitet. ES können dann verschiedene Strahlenverläufe über die gesamte Apertur 39 zu verschiedenen Zeiten während eines Scan-Zyklus nachvollzogen werden.

Die Parameter für die Hilfsablenkung zur Erzielung einer optimalen Korrektur werden durch Annahme eines geeigneten Ablenkschemas gemäß eines der Ausführungsbeispiele nach den Fig. 6a bis 6d aufgefunden, bevor die Strahlengänge nachvollzogen werden und die Parameter empirisch oder unter Anwendung eines iterativen Suchalgorithmus ermittelt werden. Dies kann unter Zuhilfenahme eines Rechners geschehen.

Im folgenden wird ein bevorzugtes Ausführungsbeispiel dargestellt.

Ein Lichtablenker (Scanner), welcher ein Ausführungsbeispiel der Erfindung ist, besitzt als Wechselwirkungsmedium einen Kristall 1, z.B. einen TeO₂-Kristall, der Schnittflächen mit 7° gegenüber den Kristallachsen aufweist. Der akustische Walk-off-Winkel beträgt 39°. Der anwendbare Hochfrequenzbereich beträgt 100-170 MHz bei einer Wellenlänge von 442 nm. Bei einer Hochfrequenzleistung von 0,8 W erscheinen mehr als 70 % des einfallenden Lichts im abgelenkten Lichtstrahl innerhalb des anwendbaren Scanning-Winkelbereichs von 2,6°. Die Apertur beträgt 3 mm in der Scanning-Richtung. Der maximale Durchsatz ausgedrückt durch aufgelöste Pixel pro Sekunde ergibt bei einem Frequenzanstieg von 7,7 MHz pro Mikrosekunde einen Scanning-Zyklus von 9 Mikrosekunden.

Gemäß der klassischen Theorie erzeugt ein 442 nm-Laserstrahl mit einem Durchmesser von 3 mm einen Spot mit einem Halbintensitätsradius von 0,75 µm, wenn er mit einer Linse mit einer Brennweite von 10 mm fokussiert wird. Eine geometrische Strahlnachzeichnung zeigt, daß individuelle Strahlen den perfekten Fokus seitlich um 1 µm verfehlen. Das bedeutet, daß sie außerhalb des Halbintensitätsradius liegen. Die Fokusverschiebung kann durch eine bestimmte Neigung der Oberfläche 23, auf welcher der Strahlspot erzeugt wird, bis zu einem gewissen Umfang kompensiert werden. Die Neigung dieser Fläche hängt jedoch von der Scanning-Geschwindigkeit ab, und es verbleibt ein beträchtlicher Anteil an nichtkompensiertem Koma.

Durch Anwendung der Erfindung läßt sich eine in unzulässigem Umfang auftretende Fokusverschiebung und Koma vermeiden. Bei dem in der Fig. 6a dargestellten Ausführungsbeispiel erfolgt dies durch Neigung der Austrittsfläche am Modulatorkristall 1, welche beispielsweise durch einen entsprechenden Schnitt hergestellt ist, in einem Winkel von 4,6° gegenüber der Normalen N der Abstrahlfläche des Schallwandlers 2. Hierdurch werden geometrische Fehler in hohem Umfang kompensiert. Die Fokusverschiebung ist beseitigt, und alle abgelenkten Strahlen liegen innerhalb eines Bereichs von 0,03 µm um den zentralen Strahl. Diese Kompensation reicht aus, um die Optiken vollständig diffraktionsbegrenzt für die meisten Anwendungsfälle zu machen.

Während bei bekannten Strahlablenkern die Strahlbreite monoton mit dem Ablenkwinkel über den gesamten Scanning-Bereich wächst, erzielt man bei schräg geneigten Austrittsflächen, insbesondere bei 4,6° für das Ausführungsbeispiel der Fig. 6a mit den oben angegebenen Werten für den Wechselwirkungskristall, daß das Maximum fast exakt in der Mitte des Bereiches liegt. Dies zeigt, daß das Maximum in der Strahlenmitte als einfacheres Designkriterium verwendet werden kann, als ein voller Strahlverlauf.

Wie aus den Fig. 6a bis 6d zu ersehen ist, verläuft die Endfläche der zusätzlichen Ablenkmittel 34, 35, 36 und 37 in einem schrägen Winkel gegenüber der Flächennormalen N der Abstrahlfläche des Schallwandlers 2. Die Endfläche ist dabei entgegengesetzt zur Strahlausbreitungsrichtung des Lichtstrahls bzw. der Neigung des Walk-off-Winkels geneigt.

Es gibt verschiedene Möglichkeiten für die Kristallorientierung und die Anordnung der Schallsäule. Während eines Scan kann die Frequenz der Schallwelle ansteigen oder sich verringern. Durch die Erfindung werden Fehler kompensiert, welche durch den Walk-off des akustischen Wellenfeldes hervorgerufen werden. Die Fehlerkompensation erfolgt unabhängig von der Orientierung derjeweiligen akusto-optischen Scanner-Einrichtung. In gleicher Weise ist die Fehlerkompensation unabhängig von geringen Abweichungen der linearen Beziehung zwischen Hochfrequenz und Zeit, welche zur Kompensation von Strahlverzerrungen in der Endfokussierungslinse angewendet werden. Ferner ist die Fehlerkorrektur gemäß der Erfindung unabhängig vom Vorhandensein von Spiegeln oder anderen richtungsändernden Einrichtungen, die nach dem akusto-optischen Deflektor angeordnet sind. Wenn der Deflektor zum Informationslesen verwendet wird, wird die Ausbreitungsrichtung des Lichtstrahls umgekehrt, und die Eingangs- und Ausgangsanordnungen für den akusto-optischen Deflektor werden umgekehrt.

## Patentansprüche

1. Verfahren zur Korrektur von Abbildungsfehlern bei der Ablenkung eines Lichtbündels mittels akusto-optischer Diffraktion, bei welcher in einem Ablenkmedium (1) ein abzulenkendes Lichtbündel an einem akustischen Wellenfeld gebeugt wird,
dadurch **gekennzeichnet,**
daß zur Kompensation von Wellenfrontfehlern des abgelenkten Lichtbündels, welche aus einem aus unterschiedlichen Schallausbreitungsgeschwindigkeiten in verschiedenen Richtungen im Ablenkmedium sich ergebenden walk-off des akustischen Wellenfeldes resultieren, wenigstens eine weitere Lichtbündelablenkung bzw. Hilfsablenkung (28,34,35,36,37), welche der Abhängigkeit der Breite des akusto-optisch abgelenkten Lichtbündels vom Ablenkwinkel bzw. Scanning-Winkel entgegenwirkt, durchgeführt wird.

2. Verfahren nach Anspruch 1, dadurch gekennzeichnet, daß die Hilfsablenkung nach der akusto-optischen Diffraktion durchgeführt wird.

3. Verfahren nach Anspruch 1 oder 2, dadurch gekennzeichnet, daß wenigstens eine der Hilfsablenkungen mittels Brechung an einer Grenzfläche (34) zwischen dem Medium, in welchem die akusto-optische Diffraktion stattfindet, und einem umgebenden Medium erfolgt.

4. Verfahren nach einem der Ansprüche 1 bis 3, dadurch gekennzeichnet, daß wenigstens eine Hilfsablenkung durch Brechung in einem Prisma (35) erfolgt.

5. Verfahren nach Anspruche 1 oder 2, dadurch gekennzeichnet, daß wenigstens eine Hilfsablenkung mittels lichtbeugender Microstrukturen (36) erfolgt.

6. Verfahren nach einem der Ansprüche 1 bis 3, dadurch gekennzeichnet, daß wenigstens eine Hilfsablenkung mit Hilfe einer gegenüber der optischen Achse des abgelenkten Lichtbündels dezentrierten Linse (37) erfolgt.

7. Verfahren nach einem der Ansprüche 1 bis 3, dadurch gekennzeichnet, daß die Hilfsablenkung durch eine Kombination aus Brechung und Beugung erfolgt.

8. Verfahren nach einem der Ansprüche 1 bis 7, dadurch gekennzeichnet, daß die Größe der relativen Änderung der Lichtbündelbreite 65 % oder weniger von der ohne Hilfsablenkung beträgt.

9. Verfahren nach einem der Ansprüche 1 bis 8, dadurch gekennzeichnet, daß das abgelenkte und korrigierte Lichtbündel an der dem akusto-optischen Ablenkmedium abgekehrten Seite der Hilfsablenkung fokussiert wird.

10. Verfahren nach einem der Ansprüche 1 bis 9, dadurch gekennzeichnet, daß mit dem abgelenkten und korrigierten Lichtbündel ein Muster geschrieben wird.

11. Verfahren nach einem der Ansprüche 1 bis 9, dadurch gekennzeichnet, daß mit dem abgelenkten und korrigierten Lichtbündel ein Muster gelesen wird.

12. Verfahren nach einem der Ansprüche 1 bis 11, dadurch gekennzeichnet, daß die akusto-optische Ablenkung mit Hilfe eines Hochfrequenzsignals mit im wesentlichen linear zeitabhängiger Frequenz betrieben wird.

13. Vorrichtung zur Korrektur von Abbildungsfehlern bei der Ablenkung eines Lichtbündels mittels akusto-optischer Diffraktion mit einem akusto-optischen Lichtablenker (1, 2), bestehend aus einem Kristall (1) als Ablenkungsmedium und einem angekoppelten Schallwandler (2), dadurch gekennzeichnet, daß zur Kompensation von Wellenfronffehlern des abgelenkten Lichtbündels, welche aus einem aus unterschiedlichen Schallausbreitungsgeschwindigkeiten in verschiedenen Richtungen im Ablenkungsmedium sich ergebenden walk-off des akustischen Wellenfeldes resultieren, wenigstens eine zweite Ablenkeinrichtung (28; 34; 35; 36; 37) vorgesehen ist, die derart ausgestaltet und angeordnet ist, daß sie der Abhängigkeit der Breite des akustooptisch abgelenkten Lichtbündels vom Ablenkwinkel bzw. Scanning-Winkel entgegenwirkt.

14. Vorrichtung nach Anspruch 13, dadurch gekennzeichnet, daß der Lichtablenker (1,2) einen optisch anisotropen Kristall (1) aufweist.

15. Vorrichtung nach Anspruch 13 oder 14, dadurch gekennzeichnet, daß die Flächennormale N auf die Abstrahlfläche des Schallwandlers (2) weder parallel noch senkrecht zu wenigstens einer der Kristallachsen ist.

16. Vorrichtung nach einem der Ansprüche 13 bis 15, dadurch gekennzeichnet, daß der Winkel zwischen der Ausbreitungsrichtung des Schallwellenfeldes (19) und der Normalen der Abstrahlungsfläche des Schallwandlers (2) größer als 5° ist.

17. Vorrichtung nach einem der Ansprüche 13 bis 16, dadurch gekennzeichnet, daß die zweite Ablenkeinrichtung (28; 34; 35; 36; 37) an der Lichtaustritts-Seite des Lichtablenkers (1, 2) angeordnet ist.

18. Vorrichtung nach einem der Ansprüche 13 bis 16, dadurch gekennzeichnet, daß die zweite Ablenkeinrichtung (28) wenigstens eine brechende Grenzfläche (34) zwischen dem Kristall (1) und dem umgebenden Medium aufweist.

19. Vorrichtung nach einem der Ansprüche 13 bis 17, dadurch gekennzeichnet, daß die zweite Ablenkeinrichtung (28) ein Refraktionsprisma (35) aufweist.

20. Vorrichtung nach einem der Ansprüche 13 bis 17, dadurch gekennzeichnet, daß die zweite Ablenkeinrichtung (28) eine lichtbeugende Einrichtung (36) mit lichtbeugenden Microstrukturen aufweist.

21. Vorrichtung nach einem der Ansprüche 13 bis 17, dadurch gekennzeichnet, daß die zweite Ablenkeinrichtung (28) eine gegenüber der optischen Achse des abgelenkten Strahls dezentrierte Linse (37) aufweist.

22. Vorrichtung nach einem der Ansprüche 13 bis 17, dadurch gekennzeichnet, daß die zweite Ablenkeinrichtung (28) eine kombinierte Brechungs- und Beugungseinrichtung aufweist.

23. Vorrichtung nach Anspruch 18, dadurch gekennzeichnet, daß die brechende Grenzfläche (34) in der zweiten Ablenkeinrichtung (28) gegenüber der Flächennormalen der Abstrahlungsfläche des Schallwandlers (2) in einem Winkel entgegengesetzt zum Neigungswinkel, den die Ausbreitungsrichtung des Schallwellenfeldes (19) gegenüber dieser Normalen einnimmt, geneigt ist.

24. Vorrichtung nach einem der Ansprüche 13 bis 23, dadurch gekennzeichnet, daß der akusto-optische Lichtablenker (1, 2) durch ein im wesentlichen linear zeitabhängiges Hohfrequenzsignal betreibbar ist.

## Claims

1. A method of correcting aberrations in the deflection of a light beam by means of acousto-optical diffraction in which a light beam to be deflected is diffracted in a deflection medium (1) at an acoustic wave field,
characterised in that
for compensation of wave front errors of the deflected light beam, which result from a walk-off of the acoustic wave field that arises out of different speeds of propagation of sound in different directions in the deflection medium, at least one further light beam deflection or auxiliary deflection (28, 34, 35, 36, 37) which counteracts the dependency of the width of the acousto-optically deflected light beam on the deflection angle or scanning angle is effected.

2. A method according to claim 1 characterised in that the auxiliary deflection is effected after acousto-optical diffraction.

3. A method according to claim 1 or claim 2 characterised in that at least one of the auxiliary deflections is effected by means of refraction at an interface (34) between the medium in which acousto-optical diffraction occurs and a surrounding medium.

4. A method according to one of claims 1 to 3 characterised in that at least one auxiliary deflection is effected by refraction in a prism (35).

5. A method according to claim 1 or claim 2 characterised in that at least one auxiliary deflection is effected by means of light-diffracting microstructures (36).

6. A method according to one of claims 1 to 3 characterised in that at least one auxiliary deflection is effected by means of a lens (37) which is decentered with respect to the optical axis of the deflected light beam.

7. A method according to one of claims 1 to 3 characterised in that the auxiliary deflection is effected by a combination of refraction and diffraction.

8. A method according to one of claims 1 to 7 characterised in that the magnitude of the relative change in the light beam width is 65% or less of that without auxiliary deflection.

9. A method according to one of claims 1 to 8 characterised in that the deflected and corrected light beam is focussed at the side of the auxiliary deflection, which is remote from the acousto-optical deflection medium.

10. A method according to one of claims 1 to 9 characterised in that a pattern is written with the deflected and corrected light beam.

11. A method according to one of claims 1 to 9 characterised in that a pattern is read with the deflected and corrected light beam.

12. A method according to one of claims 1 to 11 characterised in that the acousto-optical deflection is operated by means of a high-frequency signal of substantially linearly time-dependent frequency.

13. Apparatus for correcting aberrations in the deflection of a light beam by means of acousto-optical diffraction, having an acousto-optical light deflector (1, 2) comprising a crystal (1) as a deflection medium and a sound transducer (2) coupled thereto, characterised in that for compensation of wave front errors of the deflected light beam, which result from a walk-off of the acoustic wave field that arises out of different speeds of propagation of sound in different directions in the deflection medium, there is provided at least one second deflection means (28; 34; 35; 36; 37) which is of such a configuration and arrangement that it counteracts the dependency of the width of the acousto-optically deflected light beam on the deflection angle or scanning angle.

14. Apparatus according to claim 13 characterised in that the light deflector (1, 2) has an optically anisotropic crystal (1).

15. Apparatus according to claim 13 or claim 14 characterised in that the normal N to the radiation surface of the sound transducer (2) is neither parallel to nor perpendicular to at least one of the crystal axes.

16. Apparatus according to one of claims 13 to 15 characterised in that the angle between the direction of propagation of the sound wave field (19) and the normal to the radiation surface of the sound transducer (2) is greater than 5°.

17. Apparatus according to one of claims 13 to 16 characterised in that the second deflection means (28; 34; 35; 36; 37) is arranged at the light exit side of the light deflector (1, 2).

18. Apparatus according to one of claims 13 to 16 characterised in that the second deflection means (28) has at least one refracting interface (34) between the crystal (1) and the surrounding medium.

19. Apparatus according to one of claims 13 to 17 characterised in that the second deflection means (28) has a refraction prism (35).

20. Apparatus according to one of claims 13 to 17 characterised in that the second deflection means (28) has a light-diffracting means (36) with light-diffracting microstructures.

21. Apparatus according to one of claims 13 to 17 characterised in that the second deflection means (28) has a lens (37) which is decentred relative to the optical axis of the deflected beam.

22. Apparatus according to one of claims 13 to 17 characterised in that the second deflection means (28) has a combined refraction and diffraction means.

23. Apparatus according to claim 18 characterised in that the refracting interface (34) in the second deflection means (28) is inclined relative to the normal to the radiation surface of the sound transducer (2) at an angle in opposite relationship to the angle of inclination which is adopted by the direction of propagation of the sound wave field (19) with respect to said normal.

24. Apparatus according to one of claims 13 to 23 characterised in that the acousto-optical light deflector (1, 2) is operable by a substantially linearly time-dependent high-frequency signal.

## Revendications

1. Procédé de correction des aberrations dans la déflexion d'un faisceau lumineux par diffraction acousto-optique, dans laquelle, dans un milieu de déviation (1), un faisceau lumineux à dévier est diffracté sur un champ d'ondes acoustiques,
caractérisé par le fait
que pour la compensation des défauts de front d'onde du faisceau lumineux dévié qui résultent d'un walk-off du champ acoustique dû à des vitesses différentes de propagation du son dans différentes directions dans le milieu de déviation est exécutée au moins une déviation supplémentaire du faisceau lumineux ou déviation auxiliaire (28, 34, 35, 36, 37) qui s'oppose à la dépendance de la largeur du faisceau lumineux dévié par voie acousto-optique de l'angle de déviation ou angle de balayage.

2. Procédé selon la revendication 1, caractérisé par le fait que la déviation auxiliaire est effectuée après la diffraction acousto-optique.

3. Procédé selon l'une des revendications 1 et 2, caractérisé par le fait qu'au moins une des déviations auxiliaires est effectuée par réfraction à une interface (34) entre le milieu dans lequel a lieu la diffraction acousto-optique et un milieu environnant.

4. Procédé selon l'une des revendications 1 à 3, caractérisé par le fait qu'au moins une déviation auxiliaire est effectuée par réfraction dans un prisme (35).

5. Procédé selon l'une des revendications 1 et 2, caractérisé par le fait qu'au moins une déviation auxiliaire est effectuée au moyen de microstructures diffractant la lumière (36).

6. Procédé selon l'une des revendications 1 à 3, caractérisé par le fait qu'au moins une déviation auxiliaire est effectuée au moyen d'une lentille (37) décentrée par rapport à l'axe optique du faisceau lumineux dévié.

7. Procédé selon l'une des revendications 1 à 3, caractérisé par le fait que la déviation auxiliaire est effectuée au moyen d'une combinaison de réfraction et de diffraction.

8. Procédé selon l'une des revendications 1 à 7, caractérisé par le fait que la variation relative de la largeur du faisceau lumineux est inférieure ou égale à 65 % de celle qui a lieu sans déviation auxiliaire.

9. Procédé selon l'une des revendications 1 à 8, caractérisé par le fait que le faisceau lumineux dévié et corrigé est focalisé sur le côté de la déviation auxiliaire opposé au milieu de déviation acousto-optique.

10. Procédé selon l'une des revendications 1 à 9, caractérisé par le fait qu'une figure est écrite avec le faisceau lumineux dévié et corrigé.

11. Procédé selon l'une des revendications 1 à 9, caractérisé par le fait qu'une figure est lue avec le faisceau lumineux dévié et corrigé.

12. Procédé selon l'une des revendications 1 à 11, caractérisé par le fait que la déviation acousto-optique est produite au moyen d'un signal à haute fréquence dont la fréquence varie sensiblement linéairement avec le temps.

13. Dispositif pour la correction des aberrations dans la déviation d'un faisceau lumineux par diffraction acousto-optique au moyen d'un déflecteur acousto-optique de lumière (1, 2), constitué d'un cristal (1) comme milieu de déviation et d'un transducteur acoustique (2) couplé à celui-ci, caractérisé par le fait que pour la compensation des défauts de front d'onde du faisceau lumineux dévié qui résultent d'un walk-off du champ acoustique dû à des vitesses différentes de propagation du son dans différentes directions dans le milieu de déviation est prévu au moins un deuxième dispositif de déviation (28 ; 34 ; 35 ; 36 ; 37) qui est fait et placé de façon à s'opposer à la dépendance de la largeur du faisceau lumineux dévié par voie acousto-optique de l'angle de déviation ou angle de balayage.

14. Dispositif selon la revendication 13, caractérisé par le fait que le déflecteur de lumière (1, 2) présente un cristal à anisotropie optique (1).

15. Dispositif selon l'une des revendications 13 et 14, caractérisé par le fait que la normale N à la face d'émission du transducteur acoustique (2) n'est ni parallèle ni perpendiculaire à au moins un des axes du cristal.

16. Dispositif selon l'une des revendications 13 à 15, caractérisé par le fait que l'angle entre la direction de propagation du champ d'ondes acoustiques (19) et la normale à la face d'émission du transducteur acoustique (2) est supérieur à 5°.

17. Dispositif selon l'une des revendications 13 à 16, caractérisé par le fait que le deuxième dispositif de déviation (28 ; 34 ; 35 ; 36 ; 37) est placé sur le côté de sortie de la lumière du déflecteur de lumière (1, 2).

18. Dispositif selon l'une des revendications 13 à 16, caractérisé par le fait que le deuxième dispositif de déviation (28) présente au moins une interface diffractante (34) entre le cristal (1) et le milieu environnant.

19. Dispositif selon l'une des revendications 13 à 17, caractérisé par le fait que le deuxième dispositif de déviation (28) présente un prisme de réfraction (35).

20. Dispositif selon l'une des revendications 13 à 17, caractérisé par le fait que le deuxième dispositif de déviation (28) présente un dispositif diffractant la lumière (36) qui comporte des microstructures diffractant la lumière.

21. Dispositif selon l'une des revendications 13 à 17, caractérisé par le fait que le deuxième dispositif de déviation (28) présente une lentille (37) décentrée par rapport à l'axe optique du faisceau dévié.

22. Dispositif selon l'une des revendications 13 à 17, caractérisé par le fait que le deuxième dispositif de déviation (28) présente un dispositif combiné de réfraction et de diffraction.

23. Dispositif selon la revendication 18, caractérisé par le fait que l'interface réfringente (34) du deuxième dispositif de déviation (28) est inclinée par rapport à la normale à la face d'émission du transducteur acoustique (2) d'un angle opposé à l'angle d'inclinaison de la direction de propagation du champ acoustique (19) par rapport à cette normale.

24. Dispositif selon l'une des revendications 13 à 23, caractérisé par le fait que le déflecteur acousto-optique de lumière (1, 2) peut être actionné par un signal à haute fréquence dont la fréquence varie sensiblement linéairement avec le temps.
